# DEMANDE DE BREVET EUROPEEN

(11) **EP 3 121 213 A1**
(43) Date de publication de la demande: **25.01.2017**
(21) Numéro de dépôt: 16305934.8
(22) Date de dépôt: 21.07.2016
(51) Int. Cl.: C08G 71/04, C08G 59/00, C04B 26/16, C09D 163/00

(54) **LIANTS NON BITUMINEUX ISSUS DE COMPOSÉS PHÉNOLIQUES BIOSOURCÉS ET PROCÉDÉS DE FABRICATION**

(30) Priorité: 24.07.2015 FR 1557079
(71) Demandeur: COLAS, 92100 Boulogne-Billancourt (FR)
(72) Inventeur: BESSE, Vincent, 93140 BONDY (FR); DESROCHES, Myriam, 91440 BURES SUR YVETTE (FR); CAILLOL, Sylvain, 34090 MONTPELLIER (FR)
(74) Mandataire: Jacobacci Coralis Harle

(57) **Abrégé**

L'invention concerne des matériaux issus de compositions de liants pour la réalisation de couches et/ou revêtements de construction routière et/ou de génie civil, de produits de marquage ou de produits d'étanchéité ou d'isolation, comprenant un liant polymère, notamment un liant polyhydroxyuréthane ou polyépoxyde, obtenu en quatre étapes synthétiques ou moins à partir d'un composé précurseur biosourcé ayant un noyau benzénique substitué par un groupe hydroxyle et au moins un autre groupe fonctionnel choisi parmi les groupes acide carboxylique, aldéhyde, éther, ester, alcool, hydroxyle et cétone.

## Description

L'invention concerne d'une manière générale des liants organiques synthétiques non bitumineux de nature polyhydroxyuréthane ou polyépoxyde obtenus partiellement ou totalement à partir de composés précurseurs aromatiques biosourcés, et leur utilisation pour la réalisation de matériaux pour le bâtiment et/ou les travaux publics, et en particulier des matériaux pour confectionner des couches et/ou revêtements de construction routière et/ou de génie civil. L'invention concerne également les matériaux et produits incorporant ces liants, et des procédés de fabrication de ces liants.

Les liants utilisés dans la construction routière et para routière sont généralement à base de bitume, issu de la transformation du pétrole. Ces liants sont donc obtenus à partir de matières premières dites non renouvelables puisque le pétrole est une ressource d'origine fossile.

Le bitume est utilisé dans des applications variées de par son pouvoir agglomérant. En effet, il adhère à la majorité des matériaux usuels tels que la pierre, le béton, le bois, les métaux et le verre. En outre, c'est un excellent isolant thermique et diélectrique.

Aujourd'hui, la plupart des chaussées sont revêtues d'enrobés bitumineux qui ont fait la preuve de leur capacité à répondre aux contraintes de l'application d'une part et aux sollicitations liées au trafic et aux conditions climatiques d'autre part. Ces enrobés sont constitués par des granulats liés entre eux par du bitume ou du bitume modifié par ajout d'additifs, en particulier des élastomères et/ou des polymères thermoplastiques.

Des granulats liés par du bitume sont également utilisés dans le bâtiment et les travaux publics pour constituer entre autres des chapes d'étanchéité, des revêtements de trottoirs, des perrés, des revêtements d'ouvrage d'art. Le bitume est de plus utilisé dans des applications dites industrielles comme l'étanchéité, l'isolation thermique ou phonique.

Le risque d'épuisement des ressources pétrolières a généré un besoin de développer de nouveaux liants synthétiques non bitumineux susceptibles de se substituer dans diverses applications aux liants traditionnellement utilisés, qui sont composés d'éléments non renouvelables et contiennent en outre des hydrocarbures aromatiques polycycliques (HAP). Ces liants synthétiques non bitumineux présentent par ailleurs l'avantage de permettre d'obtenir des revêtements colorés à façon.

Les liants polyuréthane sont connus, notamment dans le domaine des liants routiers, et leur préparation fait généralement appel à des réactifs de nature isocyanate. Citons par exemple le brevet US 2013/0216308 qui décrit des polyuréthanes à base de diphényl-4,4'-diisocyanate (MDI), ou ses prépolymères, pour l'obtention de couches de roulement ou de fondation. Or, certains monomères isocyanate clés, comme par exemple le méthylène diphényl-4,4'-diisocyanate (MDI), le toluène diisocyanate (TDI), l'hexaméthylène diisocyanate (HDI) et l'isophorone diisocyanate (IPDI) ont été classés comme composés toxiques et CMR (Cancérigène, mutagène et reprotoxique). Les valeurs moyennes d'exposition professionnelle en France sont réglementées à une concentration maximale de 0,01 ppm pour le TDI et le MDI. Le MDI est d'ailleurs présent dans l'annexe XVII du règlement Européen Reach, qui définit les restrictions applicables à la fabrication, à la mise sur le marché et à l'utilisation de certaines substances dangereuses et de certains mélanges et articles dangereux. Ces isocyanates sont eux-mêmes issus d'une chimie faisant appel pour la formation des fonctions NCO au phosgène, extrêmement corrosif et toxique et notamment utilisé dans les gaz de combat du début du 20^{éme} siècle. La dégradation thermique des polyuréthanes produit par ailleurs de l'acide cyanhydrique et/ou peut reformer des isocyanates.

Les polyuréthanes souffrent donc d'un énorme inconvénient alors qu'ils représentent le 6^{ème} matériau le plus vendu dans le monde avec 14 millions de tonnes par an.

Ceci justifie le développement de résines polyuréthanes formées sans avoir recours à des réactifs de nature isocyanate telles que les résines polyhydroxyuréthanes (PHU), obtenues par réaction d'une polyamine avec un polycyclocarbonate, et qui comportent des fonctions alcool sur la chaîne polyuréthane. Plusieurs composés structurellement différents peuvent être obtenus lors d'une telle réaction, selon l'ouverture du carbonate cyclique par l'amine. On obtient alors un mélange d'alcools secondaires et d'alcools primaires. Ils sont parfois qualifiés de polyuréthanes "verts" ou de polyuréthanes "sans isocyanate".

De plus, par rapport aux polyuréthanes conventionnels, les polyhydroxyuréthanes démontrent généralement une résistance chimique et thermique améliorée. En règle générale, les polyhydroxyuréthanes possèdent des températures de transition vitreuse assez basses, qui permettent d'envisager une utilisation en tant que liant pour la construction routière ou le bâtiment.

Les liants polyépoxyde sont également connus dans les applications routières et para routières, notamment pour des couches de roulement présentant une très bonne adhérence, comme dans le brevet CN 103951318. Dans la présente demande, une résine ou un liant polyépoxyde désigne une résine ou un liant résultant de la polymérisation d'époxydes, en présence ou non de durcisseurs. Leur préparation fait appel dans la très grande majorité des cas à des réactifs bisphénoliques, en particulier les bisphénols A, S et B. Certains de ces composés sont cancérigènes, et les bisphénols les plus utilisés sont tous fortement soupçonnés d'agir comme perturbateurs endocriniens, si bien que leur utilisation est progressivement restreinte par les autorités, et ce alors qu'ils sont employés dans près d'une soixantaine de secteurs d'activité.

Le besoin de développer des résines polyépoxydes formées sans avoir recours à des réactifs bisphénoliques est donc fondamental.

Au-delà de la non-utilisation de composés toxiques pour la fabrication de liants polyhydroxyuréthanes ou polyépoxydes, il serait également souhaitable de produire ces polymères au moins en partie, sinon totalement, à partir de ressources renouvelables, en raison de contraintes environnementales telles que la restriction de la disponibilité des ressources pétrolières.

Certaines solutions sont déjà disponibles sur le plan industriel, mais elles font essentiellement appel à des polymères aliphatiques ou cycloaliphatiques, issus notamment de la cellulose, de l'amidon ou de triglycérides. La demande FR 2995891, au nom du déposant, divulgue par exemple un liant non bitumineux pour la réalisation de revêtements dans le domaine de la construction routière ou le génie civil, comprenant un polymère obtenu à partir de triglycérides polymérisés par des aminoalcools ou des polyamines. Or, il est bien connu que l'utilisation de monomères, pré-polymères ou durcisseurs aromatiques améliore les propriétés thermomécaniques des matériaux, raison pour laquelle de nombreux intermédiaires clés disponibles commercialement sont de nature aromatique, et par ailleurs issus de ressources pétrolières.

Pour pallier ces inconvénients, il est nécessaire de développer des compositions de liant polyhydroxyuréthane ou polyépoxyde, de préférence thermoplastiques, en faisant appel autant que possible à des matières premières non polluantes et renouvelables, au moins en partie aromatiques. Ces liants non bitumineux se doivent de posséder des propriétés rhéologiques similaires à celles d'un liant bitumineux ou d'origine pétrochimique auquel ils pourront donc aisément se substituer dans des applications routières, para routières ou liées au génie civil. Pour des raisons environnementales, ces liants doivent présenter une faible écotoxicité. La viscosité du liant doit diminuer avec l'augmentation de la température, ce qui permet une manipulation aisée à une température modérée, et il doit recouvrer ses propriétés mécaniques aux températures d'usage.

Les buts ci-dessus sont atteints selon l'invention par une composition de liant pour la réalisation de couches et/ou revêtements de construction routière et/ou de génie civil, de produits de marquage ou de produits d'étanchéité ou d'isolation, comprenant un liant polymère ayant été obtenu en quatre étapes synthétiques ou moins à partir d'un composé précurseur biosourcé ayant un noyau benzénique substitué par un groupe hydroxyle et au moins un autre groupe fonctionnel choisi parmi les groupes acide carboxylique, aldéhyde, éther, ester, alcool, hydroxyle et cétone.

Les liants préférés selon l'invention sont les liants de nature polyépoxyde et polyhydroxyuréthane.

L'invention concerne également un procédé de préparation d'un liant polymère de nature polyhydroxyuréthane, comprenant les étapes suivantes :
- fournir un poly(éther cyclique),
- soumettre ledit poly(éther cyclique) à une réaction de carbonatation par le dioxyde de carbone et récupérer un polycyclocarbonate,
- soumettre ledit polycyclocarbonate à une réaction de polycondensation en présence d'au moins une polyamine pour obtenir un liant polymère de nature polyhydroxyuréthane, l'un au moins du poly(éther cyclique) et de la diamine ayant été obtenu en trois étapes synthétiques ou moins à partir d'un composé précurseur biosourcé ayant un noyau benzénique substitué par un groupe hydroxyle et au moins un autre groupe fonctionnel choisi parmi les groupes acide carboxylique, aldéhyde, éther, ester, alcool, hydroxyle et cétone.

L'invention concerne en outre un procédé de préparation d'un liant polymère de nature polyépoxyde, comprenant les étapes suivantes :
- fournir un poly(époxyde),
- soumettre ledit poly(époxyde) à une réaction de polycondensation et/ou de réticulation avec lui-même ou avec au moins un durcisseur pour obtenir un liant polymère de nature polyépoxyde,
l'un au moins du poly(époxyde) et du durcisseur, s'il est utilisé, ayant été obtenu en trois étapes synthétiques ou moins à partir d'un composé précurseur biosourcé ayant un noyau benzénique substitué par un groupe hydroxyle et au moins un autre groupe fonctionnel choisi parmi les groupes acide carboxylique, aldéhyde, éther, ester, alcool, hydroxyle et cétone.

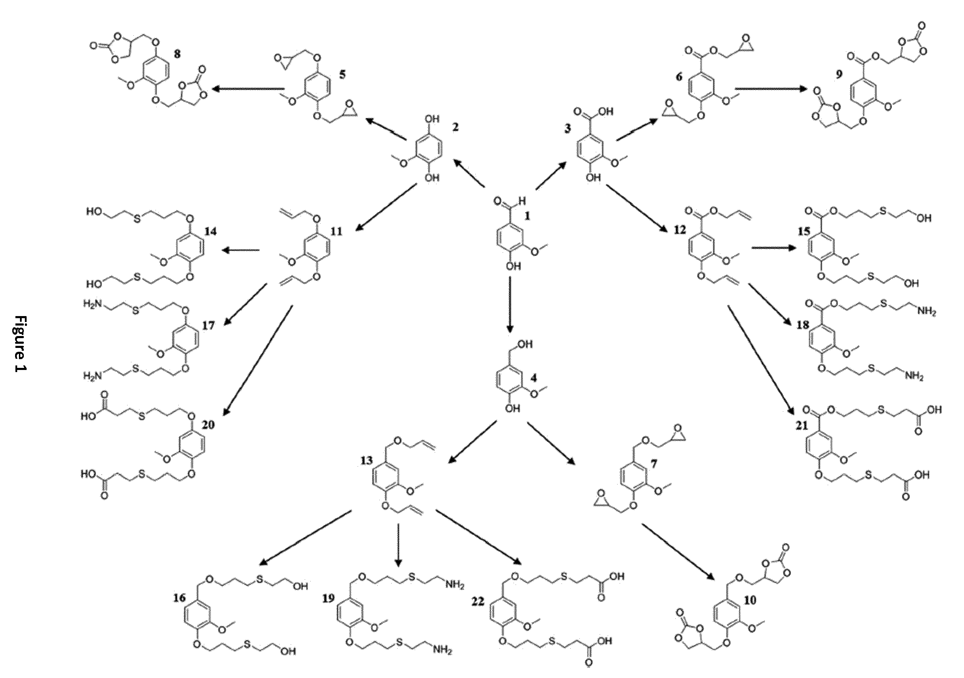

L'invention sera décrite plus en détail en référence au dessin annexé, dans lequel la figure 1 présente quelques synthons ou précurseurs utilisables pour la synthèse de liants polymères, obtenus à partir de la vanilline, composé phénolique biosourcé selon l'invention.

Dans la présente demande, le terme "biosourcé" désigne des matériaux ou composés issus de la biomasse d'origine végétale ou animale, modifiés chimiquement ou non. Ces matières premières présentent l'avantage d'être renouvelables.

Le composé précurseur biosourcé utilisable selon la présente invention est un phénol dont le noyau benzénique est en outre substitué par au moins un autre groupe fonctionnel choisi parmi les groupes acide carboxylique (notamment le groupe carboxy COOH), aldéhyde (notamment le groupe formyle CHO), éther (notamment le groupe méthoxy CH₃O), ester, alcool (notamment le groupe CH₂OH), hydroxyle et cétone, de préférence les groupes hydroxyle, acide carboxylique et aldéhyde. Les éventuels sels de ces groupes entrent également dans le cadre de l'invention.

Le composé aromatique précurseur biosourcé utilisable selon la présente invention peut être choisi, sans limitation, parmi la vanilline, le phloroglucinol, le catéchol, le résorcinol, l'acide gallique, l'eugénol, le gaïacol, le pyrogallol, la catéchine, l'alcool salicylique, les flavonoïdes, les isoflavonoïdes; la vanilline, le phloroglucinol, le catéchol, le résorcinol et l'acide gallique étant préférés. Parmi ceux-ci, on utilisera préférentiellement la vanilline (4-hydroxy-3-méthoxybenzaldéhyde) en tant que synthon ("building block") précurseur, car elle est facilement accessible, en grande quantité, et à faible coût, par divers procédés à partir de la biomasse, notamment par dépolymérisation d'un déchet majeur de l'agroforesterie, la lignine, récupérée des eaux résiduaires de l'industrie de la pâte à papier. Cette façon de produire la vanilline est avantageuse car elle n'entre pas en compétition avec la production de ressources alimentaires.

Au même titre que la vanilline, ses dérivés ou précurseurs oxydés ou réduits tels que l'alcool vanillique ou l'acide vanillique peuvent être employés.

Les composés phénoliques biosourcés selon l'invention présentent l'avantage d'être facilement modifiables en peu d'étapes, et parfois même par voie enzymatique. Il est possible d'exploiter leur versatilité pour accéder à une gamme très large de monomères, pré-polymères ou durcisseurs précurseurs de résines époxydiques ou polyhydroxyuréthane en quelques étapes de synthèse, typiquement en quatre étapes synthétiques ou moins. Ce nombre réduit d'étapes confère au procédé de production correspondant un grand potentiel industriel.

Les différentes gammes de molécules accessibles à partir des composés aromatiques biosourcés selon l'invention vont maintenant être présentées, ainsi que les principales voies de synthèse et de fonctionnalisation envisageables en partant de ces composés.

Cette description sera faite en liaison avec la figure 1, qui présente une gamme non limitative de précurseurs ou de synthons directement utilisables pour la synthèse de polymères, issus de l'un des composés biosourcés selon l'invention, la vanilline. Bien que les synthons présentés sur la figure 1 soient des monomères difonctionnels, les composés phénoliques biosourcés selon l'invention peuvent être utilisés pour préparer aussi bien des monomères polyfonctionnels que des pré-polymères polyfonctionnels.

Les composés phénoliques biosourcés selon l'invention peuvent contenir une large gamme de groupes fonctionnels réactifs (polymérisables) et modifiables de façon connue par l'homme du métier, incluant les fonctions acide carboxylique, aldéhyde, éther, ester, alcool, hydroxyle et cétone. Ces groupes fonctionnels peuvent être rattachés directement au noyau aromatique ou par le biais d'un groupe divalent.

Les phénones ou les benzaldéhydes peuvent être convertis en phénols correspondants de façon connue. Dans le cas de phénones ou benzaldéhydes ortho- ou para-hydroxylés, la réaction porte le nom d'oxydation de Dakin et peut être réalisée en présence de peroxyde d'hydrogène et d'une base pour former un benzènediol. Dans le cas de la vanilline 1, le produit obtenu est le 2,5-dihydroxyanisole 2.

Les benzaldéhydes peuvent être convertis en alcools benzyliques par réduction du groupe aldéhyde. Dans le cas de la vanilline, le produit obtenu est l'alcool vanillique 4, qui est par ailleurs susceptible d'être obtenu lors du traitement de dépolymérisation de la lignine.

Les benzaldéhydes peuvent aussi être convertis en acides carboxyliques par oxydation du groupe aldéhyde. Dans le cas de la vanilline 1, le produit obtenu est l'acide vanillique 3, qui est par ailleurs susceptible d'être obtenu lors du traitement de dépolymérisation de la lignine.

Les aromatiques méthoxylés donnent accès à des phénols par déméthylation réalisée dans des conditions connues, notamment en présence du réactif BBr₃.

Les phénols, alcools benzyliques et acides carboxyliques peuvent être convertis en composés à terminaisons époxydes, notamment par réaction avec une épihalohydrine telle que l'épichlorhydrine et/ou le glycidol selon le cas, cette réaction générant des éthers de glycidyle.

Les phénols, alcools benzyliques et acides carboxyliques peuvent être convertis en dérivés allyliques, notamment par réaction avec le bromure d'allyle en milieu basique.

Ces dérivés allyliques aromatiques peuvent à leur tour être fonctionnalisés en aminés, alcools, acides carboxyliques etc., par réaction avec un composé approprié, en mettant en jeu notamment une addition thiol-ène, consistant en l'addition sur une double liaison terminale d'un réactif thiolé portant en outre une fonction amine, alcool, acide carboxylique etc.

Les composés polyhydroxyaromatiques (polyols aromatiques) tels que, sans limitation, l'acide gallique, le résorcinol, le catéchol, l'alcool vanillique 4 ou le phloroglucinol, les carboxyphénols (phénols porteurs d'un groupe acide carboxylique tels que l'acide vanillique 3) et les alcools benzyliques dont le noyau aromatique est porteur d'un groupe acide carboxylique peuvent être convertis directement en poly(éthers cycliques) par réaction avec un composé approprié, par exemple l'épichlorhydrine lors de la préparation de poly(époxydes). Ces poly(éthers cycliques) peuvent intervenir à la fois dans la synthèse des liants polyépoxyde et polyhydroxyuréthane selon l'invention. Les polyols aromatiques employés sont de préférence des benzènes diols ou des phénols porteurs d'un groupe alcool benzylique. Des exemples de poly(éthers cycliques) issus de la vanilline 1, en l'occurrence des éthers de diglycidyle, sont les composés de formules 5, 6 et 7, qui constituent des substituts biosourcés aux éthers de diglycidyle de composés bisphénoliques.

Une autre façon de produire des poly(éthers cycliques) consiste à réaliser l'acylation du glycidol par des composés aromatiques porteurs de plusieurs groupes acide carboxylique ou ses dérivés (anhydride, chlorure d'acyle...), pour former des polybenzoates de glycidyle.

Les poly(éthers cycliques) sont de préférence des poly(époxydes), mieux des diépoxydes. Dans la présente demande, un poly(époxyde) désigne un composé comprenant plusieurs fonctions époxyde (oxirane), alors qu'une résine ou un liant polyépoxyde désigne une résine ou un liant résultant de la polymérisation d'époxydes en présence ou non de durcisseurs, comme cela a été vu précédemment.

Des poly(époxydes) biosourcés peuvent également être obtenus en deux étapes par allylation de dérivés aromatiques dont le noyau aromatique est porteur d'au moins deux groupes, identiques ou différents, choisis parmi les groupes hydroxyle, CH₂OH et carboxy (COOH), puis époxydation des doubles liaisons terminales de ces composés poly(allyliques), par voie purement chimique ou enzymatique. Des exemples de dérivés diallyliques issus de la vanilline sont les composés de formules 11, 12 et 13, respectivement obtenus par allylation des composés de formules 2, 3 et 4. Ils peuvent être convertis respectivement en composés de formules 5, 6 et 7 par époxydation.

Les éthers cycliques et poly(éthers cycliques) peuvent être convertis en cyclocarbonates et polycyclocarbonates par réaction dite de "carbonatation" par le dioxyde de carbone (CO₂), qui consiste en une insertion chimique du CO₂ (cycloaddition) dans la fonction éther cyclique. Cette voie de synthèse est très intéressante car le dioxyde de carbone est une matière première disponible en abondance. Cette réaction catalytique entre le CO₂ et les oxiranes (époxydes) conduit suite à l'extension de cycle à des carbonates cycliques à cinq chaînons. Le schéma ci-dessous illustre la carbonatation catalytique d'un diépoxyde, Ra désignant un groupe divalent ou espaceur (chaîne moléculaire ou macromoléculaire, alkyle, cycloalkyle, aromatique, linéaire ou ramifiée, éventuellement polyfonctionnelle et pouvant contenir des hétéroatomes) :

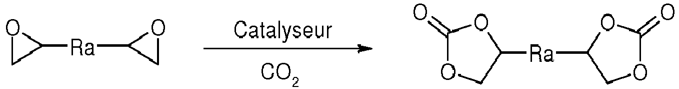

Des exemples de polycyclocarbonates issus de la vanilline sont les composés de formules 8, 9 et 10, respectivement obtenus par carbonatation des composés de formules 5, 6 et 7. Ces composés aromatiques peuvent intervenir à la fois dans la synthèse des liants polyhydroxyuréthane selon l'invention et représentent une alternative biosourcée à des monomères isocyanates aromatiques toxiques tels que le méthylène diphényl-4,4'-diisocyanate (MDI) ou le toluène diisocyanate (TDI).

Les composés poly(allyliques) mentionnés ci-dessus peuvent être convertis en monomères polyamines, polyols, acides polycarboxyliques etc., par réaction avec un composé approprié, en mettant en jeu notamment une addition thiol-ène, et ce avec de hauts rendements. Les polyamines peuvent intervenir à la fois dans la synthèse des liants polyépoxyde et polyhydroxyuréthane selon l'invention, alors que les polyols et acides polycarboxyliques peuvent être utilisés comme durcisseurs pour liants polyépoxydes.

Des exemples de polyols issus de la vanilline sont les composés de formules 14, 15 et 16, respectivement obtenus par addition thiol-ène du mercaptoéthanol sur les composés biosourcés de formules 11, 12 et 13. Des exemples de polyamines issues de la vanilline sont les composés de formules 17, 18 et 19, respectivement obtenus par addition thiol-ène de la cystéamine sur les composés biosourcés de formules 11, 12 et 13. Des exemples d'acides polycarboxyliques issus de la vanilline sont les composés de formules 20, 21 et 22, respectivement obtenus par addition thiol-ène de l'acide 3-mercaptopropionique sur les composés biosourcés de formules 11, 12 et 13.

La préparation des liants proprement dits va maintenant être décrite.

D'une manière générale, les différents composés pouvant être mis en jeu dans la synthèse des polyhydroxyuréthanes ou polyépoxydes selon l'invention, notamment les polycyclocarbonates, poly(éthers cycliques), polyamines, polyols, aminoalcools etc., peuvent tous être issus de ressources renouvelables, c'est-à-dire d'origine renouvelable (naturelle). De façon non préférée, certains d'entre peuvent être d'origine fossile, à condition de respecter les exigences de l'invention concernant l'utilisation de composés précurseurs phénoliques biosourcés.

Ainsi, il est par exemple possible d'employer conjointement, pour la formation d'un liant polyépoxyde, un poly(éther cyclique) issu d'un composé précurseur phénolique biosourcé au sens de l'invention et un durcisseur issu de la pétrochimie, ou bien à l'inverse un poly(éther cyclique) issu de la pétrochimie et un durcisseur issu d'un composé précurseur phénolique biosourcé au sens de l'invention, ou bien un poly(éther cyclique) et un durcisseur tous deux issus de composés précurseurs phénoliques biosourcés au sens de l'invention, identiques ou différents.

De même, il est possible d'employer conjointement, pour la formation d'un liant polyhydroxyuréthane, un polycyclocarbonate issu d'un composé précurseur phénolique biosourcé au sens de l'invention et une polyamine issue de la pétrochimie, ou bien à l'inverse un polycyclocarbonate issu de la pétrochimie et une polyamine issue d'un composé précurseur phénolique biosourcé au sens de l'invention, ou bien un polycyclocarbonate et une polyamine tous deux issus de composés précurseurs phénoliques biosourcés au sens de l'invention, identiques ou différents.

On entend par composé "d'origine naturelle" ou biosourcé au sens de l'invention, tout composé en provenance de la nature (biomasse d'origine végétale ou animale). Ce composé peut être extrait de la biomasse terrestre et marine renouvelable ou d'organismes vivants (animaux, micro-organismes), éventuellement ultérieurement modifié par exemple chimiquement, ou encore obtenu suite à l'action de micro-organismes vivants (par exemple des enzymes ou bactéries) sur un composé d'origine naturelle selon des procédés de type biofermentation ou biosynthèse. Les composés issus du pétrole, d'origine fossile, n'entrent pas dans cette catégorie.

La composition de liant selon l'invention peut être d'origine essentiellement ou exclusivement (100 %) naturelle. Selon l'invention, on entend par « essentiellement d'origine naturelle », un liant qui comporte au moins 80 %, de préférence au moins 90 % en poids de composés d'origine naturelle.

Le liant polymère de nature polyhydroxyuréthane selon l'invention est issu de la réaction d'au moins une polyamine avec au moins un polycyclocarbonate, l'un au moins de la polyamine et du polycyclocarbonate ayant été obtenu en trois étapes synthétiques ou moins à partir d'un composé précurseur biosourcé selon la présente invention. De préférence, le polyhydroxyuréthane est formé sans faire appel à des réactifs isocyanate.

Le liant polyhydroxyuréthane peut être préparé en deux étapes de synthèse principales. Dans une première étape, un poly(éther cyclique) est converti en un polycyclocarbonate (monomère ou pré-polymère), qui réagit dans un second temps avec une polyamine.

Dans la présente demande, un poly(éther cyclique) désigne un composé comprenant plusieurs fonctions éther cyclique, notamment des fonctions oxirane et/ou oxétane. Il s'agit d'un composé moléculaire ou macromoléculaire, alkyle, cycloalkyle, aromatique, linéaire ou ramifié, contenant éventuellement des hétéroatomes.

Le poly(éther cyclique), lorsqu'il est obtenu à partir d'un composé précurseur biosourcé selon l'invention, l'est généralement en deux étapes synthétiques ou moins.

Le polycyclocarbonate peut être formé à partir de composés phénoliques biosourcés tel que décrit plus haut, ou bien par d'autres méthodes notamment en utilisant des 1,2-diols ou 1,3-diols, par réaction avec le phosgène ou ses dérivés, ou par transcarbonatation avec un carbonate de dialkyle ou diaryle éventuellement en présence d'un catalyseur métallique ou organique. La synthèse et les applications de cyclocarbonates sont décrites notamment dans la revue Polym. Chem. 2013, 4, 4545-4561.

La polyaddition stoechiométrique des polycyclocarbonates sur les polyamines est généralement réalisée en milieu solvant polaire (DMSO, diméthylacétamide, DMF...) à des températures variant de 20°C à 100°C pour des durées moyennes de 24 à 48h, éventuellement sous atmosphère inerte. Les concentrations en réactifs sont en général de 0,5 à 1 mole/litre dans le solvant de synthèse. Le ratio molaire polyamine/polycyclocarbonate varie généralement de 0,8 à 1,2. La purification s'effectue habituellement par précipitation du polymère dans l'éther éthylique, lavages à l'éther éthylique puis séchage sous vide. Les rendements obtenus sont très élevés, souvent supérieurs à 90 %. Ces réactions sont décrites plus en détail dans Tomita, H., Sanda, F., Endo, T., J. Polymer Sci., Part A 2001, 39, 162-168 ou dans Steblyanko, A., Choi, W., Sanda, F., J. Polymer Sci., Part A 2000, 38, 2375-2380.

Lorsque le cyclocarbonate est dissymétrique, ce qui est le cas lorsqu'il comporte 5 chaînons, deux modes d'ouverture du carbonate cyclique sont possibles, conduisant à la formation possible de trois motifs avec fonctions alcool primaire et/ou secondaire, dans le cas de la réaction d'une diamine avec un dicyclocarbonate. L'un des motifs que l'on peut obtenir lors de la réaction d'une diamine primaire avec un dicyclocarbonate à 5 chaînons est représenté ci-dessous :

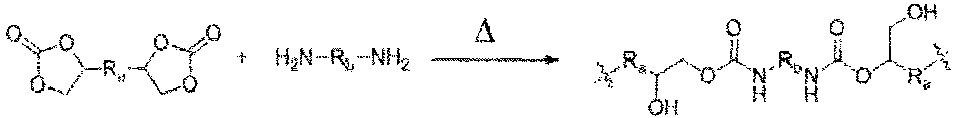

Les groupes cyclocarbonates du polycyclocarbonate comportent de préférence 5 ou 6 chaînons. Les carbonates cycliques à 6-chaînons sont généralement plus réactifs que les carbonates cycliques à 5 chaînons, ce qui permet une polymérisation plus rapide et une obtention de polyhydroxyuréthanes de plus haut poids moléculaire. De préférence le polycyclocarbonate est un dicyclocarbonate, c'est-à-dire qu'il comporte deux groupes carbonate cycliques.

Par polyamine, on entend un composé chimique ayant au moins deux groupes amine, de préférence de 2 à 6 groupes amine. La polyamine peut être une polyamine primaire ou secondaire, ou bien un composé comprenant à la fois des fonctions amine primaire ou secondaire. La polyamine comprend de préférence des groupes amino NH₂ (polyamine primaire) ou des groupes amine primaire (polyamine secondaire), mieux des groupes amino. La polyamine peut être aliphatique ou aromatique, notamment hétérocyclique. La polyamine est de préférence une diamine, et est de préférence mise en réaction avec un dicyclocarbonate. Parmi les polyamines utilisables, outre les polyamines biosourcées décrites plus haut, on peut citer les phénylène diamines telles que la para-phénylène diamine et les diamines aliphatiques, notamment de type H₂N-(CH₂)ₙ-NH₂, n allant de 2 à 10, notamment l'éthylène diamine, la 1,4-butylènediamine, l'hexaméthylène diamine et le 1,10-diaminodécane, ou bien l'isophorone diamine. Les polyamines peuvent être utilisées sous forme libre ou sous forme de sel, par exemple de chlorhydrate.

La réaction des polycyclocarbonates avec les polyamines peut être réalisée en présence de catalyseurs, notamment d'une base forte telle que le t-butylate de potassium. Elle peut également être réalisée en présence d'au moins un composé optionnel polyfonctionnel d'origine naturelle ou synthétique, capable de participer à des réactions de polycondensation, tel que, sans limitation à ces composés, un polyol, un polythiol, un aminothiol, ou un aminoalcool. Le rapport molaire de l'ensemble de ces composés optionnels par rapport à l'ensemble des polyamines est de préférence inférieur à 1, mieux inférieur à 0,1.

Par aminoalcool, on entend un composé chimique ayant au moins un groupe hydroxyle et au moins un groupement amine, et de préférence contenant de 2 à 6 fonctions réactives. Le ou les groupes amine de l'aminoalcool sont de préférence des groupes amino (NH₂) ou des groupes amine primaire, mieux des groupes amino. L'aminoalcool est de préférence difonctionnel (c'est-à-dire qu'il comporte un groupe hydroxyle et un groupe amine) ou trifonctionnel. L'aminoalcool peut être aliphatique ou aromatique, voire hétérocyclique, de préférence aliphatique. Il peut être utilisé sous forme libre ou sous forme de sel, par exemple de chlorhydrate.

Des exemples non limitatifs d'aminoalcools sont les composés suivants : 2-aminoéthanol, 2-aminopropanol, 2-aminobutanol, 2-aminohexanol, 2-méthyl-2-aminoéthanol, 2-méthyl-2-aminoéthanol, 2-méthyl-2-aminopropanol, 2-éthyl-2-aminoéthanol, 2-éthyl-2-aminopropanol, 1-amino-2-propanol, 1-amino-2-butanol, 1-amino-2-pentanol, 3-amino-2-butanol, 2-amino-1,3-propanediol, 2-amino-2-éthyl-1,3-propanediol, 3-amino-1,2-propanediol, tris-(hydroxyméthyl)-aminométhane, triisopropanolamine, 2-diméthylamino-2-méthyl-1-propanol et les aminophénols.

Par aminothiol, on entend un composé possédant au moins un groupe amine et au moins un groupe thiol. Des exemples non limitatifs d'aminothiols sont la cystéine et les aminothiophénols tels que le 2-aminothiophénol.

Par polyol, on entend un composé chimique ayant au moins deux groupes hydroxyle, de préférence de 2 à 6 groupes hydroxyle. Le polyol est de préférence un diol ou un triol. Il s'agit de préférence d'un polyol aliphatique.

Les polyols préférés selon l'invention sont issus de ressources renouvelables, certains d'entre eux ayant été décrits plus haut. Toutefois, des polyols d'origine pétrochimique peuvent aussi être employés. On peut citer, sans limitation à ces composés, le glycérol, les polyglycérols (par exemple le di-, tri-, tétra- et penta-glycérol), le sorbitol, le 1,3-propanediol, le 1,2-propanediol, le 1,4-butanediol, le 1,6-hexane diol, l'éthylène glycol, le diéthylène glycol, le dipropylène glycol, le triéthylène glycol, les polyéthylène glycols de masse moléculaire moyenne en poids variant de préférence de 300 à 6000 g/mol, les oligosaccharides, l'isosorbide, le dipentaérythritol, le pentaérythritol, le triméthylol propane.

Par polythiol, on entend un composé chimique incorporant dans sa structure au moins deux groupes thiol, de préférence de 2 à 6 groupes thiol, tel que les composés di, tri, tétra, penta ou hexathiols. Des exemples de polythiols biosourcés ont été donnés plus haut. D'autres polythiols utilisables dans la présente invention sont donnés dans la demande WO 2006/103371.

Le liant polymère de nature polyépoxyde est issu de la réaction d'au moins un poly(éther cyclique) avec lui-même et/ou avec au moins un durcisseur, l'un au moins du poly(éther cyclique) et du durcisseur, s'il est utilisé, ayant été obtenu en trois étapes synthétiques ou moins à partir d'un composé précurseur biosourcé selon l'invention.

Le liant polyépoxyde selon l'invention peut être formé par réaction d'un monomère ou pré-polymère poly(époxyde) avec lui-même par homopolymérisation, et/ou par réaction avec un co-réactif, nommé durcisseur ou agent de réticulation. Il est de préférence formé sans faire appel à des réactifs bisphénols, en particulier les bisphénols A et S, qui peuvent être ici avantageusement remplacés par les composés précurseurs biosourcés selon l'invention.

Le poly(époxyde) est de préférence un diépoxyde, mieux un éther de diglycidyle. Les poly(époxydes) peuvent notamment être obtenus par réaction d'une épihalohydrine telle que l'épichlorhydrine avec un polyol aliphatique ou aromatique (notamment un composé polyphénolique) pour former des poly(époxydes) à squelette polyéther.

Les durcisseurs sont issus de familles chimiques très diverses et peuvent être, sans limitation, de nature polyamine, polyol, polythiol, aminothiol, aminoalcool, hydroxyacide, aminoacide, aminoamide (en particulier ceux issus d'acides gras), polyacide (en particulier acide polycarboxylique ou leurs anhydrides ou halogénures), anhydride d'acide. Il est possible d'utiliser pour la formation des liants polyépoxydes les mêmes polyols, polyamines, polythiols etc. que ceux décrits dans le cadre de la formation de liants polyhydroxyuréthanes, en particulier ceux qui sont issus des composés phénoliques biosourcés selon l'invention.

Des exemples non limitatifs d'acides polycarboxyliques sont l'acide azélaïque, l'acide maléique, l'acide succinique, l'acide sébacique, l'acide subérique, l'acide fumarique, l'acide glutarique, l'acide oxalique, l'acide pimélique, l'acide pyromellitique, l'acide trimellitique, l'acide tétrahydrophtalique, l'acide endométhylène tétrahydrophtalique, l'acide tétrachlorophtalique, l'acide hexahydrophtalique, l'acide malonique, les acides alkylmaloniques, les acides alcényl maloniques, les acides alkyl succiniques, les acides alcényl succiniques, l'acide adipique, les acides phtaliques, l'acide citrique, l'acide tartrique (ces deux derniers étant aussi des hydroxyacides).

La polymérisation et/ou la réticulation des liants polyépoxydes peut être accomplie en présence d'un catalyseur de durcissement qui peut être choisi non limitativement parmi les hydroxydes alcalins tels que la soude ou la potasse, les phénolates alcalins tels que le phénolate de sodium, les halogénures métalliques de type Friedel-Crafts tels que le chlorure d'aluminum, le chlorure de zinc, le chlorure ferrique, le trifluorure de bore, l'acide phosphorique et ses esters (par exemple le n-butyl ortho-phosphate et le diéthyl ortho-phosphate), les acides et anhydrides carboxyliques tels que l'acide oxalique et l'anhydride phtalique, les composés aminés tels que la triéthylamine, l'éthylenèdiamine, la diéthylamine, la diéthylènetriamine, la triéthylènetétramine, la N-aminoéthylpipérazine, la pyridine et la pipéridine. Le catalyseur de durcissement est généralement employé à hauteur de 1 à 15 % en masse, par rapport à la masse de composés poly(époxydes).

Les liants polyépoxydes et leurs modes de préparation sont décrits plus en détail dans les brevets US 3,405,086, US 4,828,879 et US 4,412,012.

Les polymères polyhydroxyuréthanes et polyépoxydes obtenus sont stables sur une large gamme de température, et ne se dégradent généralement qu'à des températures au-delà de 200-220°C, ce qui les rend tout à fait adaptés à une utilisation en tant que liant selon l'invention. La nature aromatique des monomères, pré-polymères et/ou durcisseurs employés contribue à l'amélioration des propriétés thermomécaniques du matériau final.

Leurs propriétés physico-chimiques et leur comportement sont comparables à ceux de polyuréthanes et polyépoxydes classiques formés respectivement à partir d'isocyanates et de composés bisphénoliques. Ils présentent de préférence une température de transition vitreuse allant de -60°C à 120°C, de préférence de -50°C à 0°C, déterminable par analyse enthalpique différentielle, et qui peut être modulée en jouant sur la longueur des chaînes des monomères ou pré-polymères polyamine, polycyclocarbonate, poly(éther cyclique) ou du durcisseur.

La masse moléculaire moyenne en nombre Mn des liants polyhydroxyuréthane ou polyépoxyde selon l'invention varie de préférence de 5.000 à 60.000 g/mol, mieux de 5.000 à 30.000 g/mol, encore mieux de 7.000 à 20.000 g/mol.

Le liant polymérique selon l'invention atteint une viscosité de 0,1 à 1 Pa.s pour une température comprise entre 50°C et 250°C, de préférence comprise entre 100°C et 200°C. La viscosité peut notamment être réglée en adaptant la nature des réactifs (utilisation ou non de réactifs oligomérisés, fonctionnalité et longueur des monomères...). Son point de ramollissement, mesuré selon la norme NF EN 1427, varie de préférence de 35°C à 100°C, mieux de 50 à 90°C, sa pénétrabilité à 25°C mesurée selon la norme NF EN 1426 est de préférence supérieure 5 1/10 mm, son module complexe, mesuré à 15°C/10Hz, se situe de préférence entre 5 et 150 MPa, préférentiellement entre 20 à 120 MPa, son indice de couleur selon l'échelle de couleur Gardner et sur liant pur, mesurée selon la norme ISO 4630, est de préférence inférieur à 12. Le liant polymérique selon l'invention peut éventuellement présenter ou non un point de fragilité Fraass mesuré selon la norme NF EN 12593 inférieur à 0°C, et/ou un retour élastique mesuré selon la norme NF EN 13398 à 25°C supérieur à 50%.

Les propriétés chimiques et thermomécaniques des liants obtenus dépendent notamment du choix des couples polycyclocarbonate/polyamine ou poly(éther cyclique)/durcisseur ou du réactif poly(éther cyclique) lorsqu'il est utilisé seul.

Le liant polyhydroxyuréthane ou polyépoxyde représente de préférence de 2 à 100 % de la masse de la composition de liant selon l'invention, de préférence encore de 2 à 98 % en masse, mieux de 5 à 75 %, encore mieux de 10 à 60 %, ou encore de 20 à 40 % en masse, par rapport à la masse totale de la composition. Le liant polyhydroxyuréthane ou polyépoxyde représente de préférence au moins 2 % de la masse de la composition de liant, mieux au moins l'une des valeurs suivantes : 5 %, 10 %, 20 %, 25 %, 30 %, 40 %, 50 %, de la masse de la composition de liant.

La composition de liant selon l'invention est de préférence non bitumineuse, ce qui signifie qu'elle contient de préférence moins de 1 % en masse de bitume, et de préférence 0 %, par rapport à la masse totale de la composition.

La composition de liant selon l'invention peut en outre contenir au moins une résine, de préférence d'origine naturelle, en particulier d'origine végétale, telles que les résines sécrétées par certains végétaux et leurs dérivés modifiés.

La composition de liant selon l'invention peut comprendre jusqu'à 98 % (0-98 %, de préférence 2-98 %) en masse de ladite résine, par rapport à la masse totale de la composition de liant, de préférence de 25 à 95 % en masse, mieux 40 à 90 % en masse et encore mieux 40 à 70 % en masse. La ou les résines représentant de préférence au moins 2 % de la masse de la composition de liant, mieux au moins l'une des valeurs suivantes : 10 %, 25 %, 30 %, 40 %, 50 %, de la masse de la composition de liant.

Ladite résine d'origine naturelle peut être utilisée telle quelle ou sous forme modifiée, c'est-à-dire après avoir subi au moins une transformation chimique telle qu'une estérification, une hydrogénation, une réaction avec l'anhydride maléique (dite maléisation), une polymérisation ou une dismutation, cette liste n'étant bien entendu pas limitative.

En outre, bien que cela ne soit pas recommandé pour les raisons mentionnées précédemment, on peut également utiliser pour la formulation de la composition de liant selon l'invention des résines issues de ressources fossiles.

Des exemples de résines d'origine naturelle ou fossile utilisables dans le cadre de l'invention sont fournis dans la demande FR2995891, au nom du demandeur.

Pour entrer utilement dans la formulation de la composition de liant selon l'invention, ladite résine, d'origine naturelle ou fossile, a de préférence une température de ramollissement mesurée selon la norme NF EN 1427 allant de 30°C à 200°C, mieux de 80°C à 200°C, mieux encore de 100°C à 200°C, et idéalement de 120°C à 180°C. En général, on utilisera de préférence des résines ayant une température de ramollissement d'au moins 100°C, de préférence d'au moins 120°C, car ces résines conduisent, après mélange avec les composés de l'invention dans des proportions appropriées, à des liants ayant les caractéristiques de viscoélasticité très proches, voire analogues à celles des bitumes pour une plage de températures allant de -20°C à +70°C, et sans qu'il soit nécessaire de rajouter à la formulation de la composition de liant un élastomère et/ou un polymère thermoplastique.

Pour plus d'informations quant aux résines d'origine naturelle, on peut se reporter à l'article de Bernard DELMOND, « Résines naturelles », Techniques de l'Ingénieur, traité "Constantes physico-chimiques" - K340-1 à 12, mai 2002.

Selon un mode de réalisation, la composition de liant selon l'invention est exempte de tout élastomère naturel ou synthétique, tel que par exemple le polybutadiène, le latex, le caoutchouc styrène-butadiène (SBR), le styrène-butadiène-styrène (SBS), l'éthylène-acétate de vinyle (EVA). Selon un autre mode de réalisation, la composition de liant selon l'invention est exempte de tout polymère thermoplastique tel que, par exemple, les polyoléfines (polyéthylène, polypropylène, copolymères d'acétate de vinyle et d'éthylène et/ou de composés acryliques), les polyamides, les polyesters, le polyphénylène oxyde, les polyacétals, les polycarbonates, les polysulfures, les polyéther éther cétone, les poly(méth)acrylates. La composition de liant selon l'invention peut aussi être simultanément exempte de tout élastomère naturel ou synthétique et de tout polymère thermoplastique.

Les élastomères naturels et synthétiques et les polymères thermoplastiques, qui peuvent être choisis parmi ceux cités ci-dessus, représentent de préférence moins de 10 % de la masse totale de la composition de liant de l'invention, de préférence moins de 5 %.

Pour modifier de façon adéquate les propriétés du matériau final, la composition de liant selon l'invention peut comprendre au moins un composé comonomère aliphatique, de préférence une ou plusieurs huiles végétales d'origine naturelle. Comme cela est bien connu, les huiles végétales peuvent être obtenues par trituration de graines, noyaux, fruits de végétaux oléagineux. D'autres sources de triglycérides naturels sont les huiles issues de micro ou macro algues, ou de tallol.

Les huiles végétales peuvent être utilisées brutes ou raffinées. Elles peuvent également être modifiées par des réactions chimiques, comme l'estérification, la transestérification, l'oxydation, l'hydrogénation, l'amidification, l'oligomérisation, la maléisation.

Ces huiles d'origine naturelle peuvent notamment provenir d'huiles végétales usagées de l'industrie agroalimentaire, par exemple d'huiles de friture, de conservation, à condition que celles-ci aient une origine naturelle.

Parmi les huiles végétales convenant pour la composition de liant selon l'invention, on peut citer, sans limitation, les huiles de lin, de colza, de tournesol, de soja, d'olive, de palme, de palmiste, de ricin, de bois de Chine, de maïs, de courge, de pépins de raisin, de jojoba, de sésame, de noix, de noisette, d'amande, de karité, de macadamia, de coton, de luzerne, de seigle, de carthame, d'arachide, de coco et de coprah. Les huiles végétales préférées selon l'invention sont les huiles de soja, de ricin (de préférence déshydratées), de colza, de coco.

Les huiles végétales peuvent être employées seules ou en présence d'un catalyseur qui accélère la réaction de polymérisation de l'huile en présence d'oxygène. Ces catalyseurs sont bien connus et sont généralement des sels organiques de métaux tels que le cobalt, le zirconium et le manganèse, en particulier des octanoates et naphtènates de ces métaux.

Les huiles végétales convenant pour le liant de l'invention ont en général une viscosité à 25°C telle que mesurée au viscosimètre Brookfield de 50 mPa.s à 1000 mPa.s, de préférence de 50 mPa.s à 500 mPa.s. Bien évidemment, la viscosité de l'huile est choisie en fonction du liant polymère utilisé pour formuler la composition de liant, de manière à obtenir une composition de liant ayant la pénétrabilité, le point de ramollissement ou la viscosité requis.

Les huiles végétales selon l'invention peuvent avoir des indices d'iode allant de 0 à 200. Selon un mode de réalisation, on utilise des huiles pauvres en chaînes grasses poly-insaturées, notamment les huiles ou graisses ayant un indice d'iodefaible, préférentiellement inférieur ou égal à 70, mieux inférieur ou égal à 30, afin de bénéficier de meilleures propriétés de vieillissement.

La composition de liant selon l'invention peut également comprendre un ou plusieurs agents colorants tels que des pigments minéraux et des colorants organiques, ou un ou plusieurs agents de durcissement.

La composition de liant selon l'invention peut remplacer les liants bitumineux ou les liants de synthèse d'origine pétrochimique dans toutes leurs applications, sans aucune difficulté technique. La formulation de la composition de liant selon l'invention est ajustée en fonction des caractéristiques du bitume/liant auquel elle se substitue. Elle peut être utilisée pour la réalisation de matériaux pour le bâtiment et les travaux publics, en particulier des matériaux pour confectionner des couches et/ou revêtements de construction routière et/ou de génie civil. Ainsi, la composition de liant selon l'invention peut être utilisée pour lier des granulats entre eux et éventuellement les coller sur le support sur lequel ils sont répandus pour faciliter leur adhérence.

Le terme granulat correspond à un matériau granulaire utilisé dans la construction notamment un matériau décrit dans la norme XP P 18-545. Les agrégats, au sens de XP P 98-135, sont également susceptibles d'être utilisés en combinaison avec la composition de liant selon l'invention. Les granulats comprennent les fines, fillers (charges), sable, gravillons et graves.

L'invention concerne en outre un matériau pour la réalisation de couches et/ou revêtements de construction routière et/ou de génie civil, comprenant une composition de liant selon l'invention et optionnellement un granulat.

La composition de liant peut être mélangée aux granulats avant application pour former des enrobés (technique d'enrobage) à chaud ou à froid, ou répandue sur la chaussée avant ou après le répandage des granulats pour former les couches ou revêtements. Pour caractériser les enrobés, on utilise en particulier la description de leur formule granulaire, c'est-à-dire la répartition de la masse des granulats qui entrent dans la composition de l'enrobé en fonction de la classe granulaire.

Lorsque le matériau de l'invention ne comprend pas de granulat, il peut être employé pour la réalisation de couches d'accrochage au liant fluxé ou à l'émulsion.

La composition de liant selon l'invention peut être utilisée selon l'application, telle quelle (sans solvant), fluxée (c'est-à-dire modifié par ajout d'un solvant) ou sous forme d'une émulsion aqueuse.

Lorsqu'elle est fluxée, la composition de liant de l'invention comprend au moins un fluxant (fluidifiant), tel qu'un solvant d'origine pétrolière, pétrochimique ou carbochimique, ou de préférence un fluxant d'origine naturelle, idéalement à base de matières grasses animales et/ou végétales, renouvelables et non toxiques. Ces fluxants d'origine naturelle peuvent avantageusement être modifiés par oxydation afin d'augmenter leur siccativité, tel qu'exposé dans la demande FR 2876382, au nom du déposant.

Le matériau de l'invention peut notamment être un enrobé, par exemple un enrobé coulé à froid ou un enrobé au liant anhydre fluxé, un enrobé à chaud, un enduit superficiel, un asphalte coulé ou un produit de marquage routier.

Lorsque la composition de liant selon l'invention est utilisée dans des applications routières, elle pourra être caractérisée par les mêmes paramètres que les liants bitumineux, mesurés selon les mêmes méthodes, exprimés selon les mêmes unités. Les spécifications des bitumes routiers et bitumes routiers de grade dur sont données respectivement dans les normes NF EN 12591 et NF EN 13924. Ils sont en général caractérisés par une pénétrabilité à 25°C, mesurée selon la norme NF EN 1426 et exprimée en dixième de millimètre, par une température de ramollissement, exprimée en degré centigrade et mesurée selon la norme NF EN 1427, ou par leur viscosité. De même que pour les bitumes, la composition de liant de l'invention peut présenter une pénétrabilité à 25°C allant de 10 à 330 1/10mm, préférentiellement de 20 à 220 1/10mm.

Les produits préparés à partir de la composition de liant selon l'invention peuvent être utilisés pour la réalisation de matériaux pour le bâtiment et les travaux publics, et en particulier des matériaux pour confectionner des couches et/ou revêtements de construction routière et/ou de génie civil notamment pour la construction et la réparation de routes, autoroutes, pistes d'aérodrome, sols industriels, sportifs ou piétonniers, les aménagements de voirie et réseaux divers, les réseaux de voie ferrée ; des matériaux pour la mise en place des équipements de la route tels que la signalisation (produits de marquage) ; des matériaux pour la construction de bâtiments industriels notamment pour assurer l'étanchéité et l'isolation des bâtiments industriels, la protection et le bardage des ouvrages de génie civil et des bâtiments industriels, les murs antibruit et tous aménagements de sécurité ainsi que la production de tous matériaux en relation avec ces domaines.

Les applications des compositions de liant et des matériaux selon l'invention sont décrites en détail dans la demande FR 2995891, au nom du demandeur.

## Revendications

1. Matériau pour la réalisation de couches et/ou revêtements de construction routière et/ou de génie civil, comprenant une composition de liant comprenant un liant polymère obtenu en quatre étapes synthétiques ou moins à partir d'un composé précurseur biosourcé ayant un noyau benzénique substitué par un groupe hydroxyle et au moins un autre groupe fonctionnel choisi parmi les groupes acide carboxylique, aldéhyde, éther, ester, alcool, hydroxyle et cétone, **caractérisé en ce que** le matériau est un enduit superficiel, un enrobé coulé à froid, un enrobé à chaud, un asphalte coulé ou un produit de marquage routier.

2. Matériau selon la revendication 1, **caractérisée en ce qu'**il comprend un liant polymère de nature polyhydroxyuréthane issu de la réaction d'au moins une polyamine avec au moins un polycyclocarbonate, l'un au moins de la polyamine et du polycyclocarbonate ayant été obtenu en trois étapes synthétiques ou moins à partir d'un composé précurseur biosourcé ayant un noyau benzénique substitué par un groupe hydroxyle et au moins un autre groupe fonctionnel choisi parmi les groupes acide carboxylique, aldéhyde, éther, ester, alcool, hydroxyle et cétone.

3. Matériau selon la revendication 2, **caractérisée en ce que** la polyamine est une diamine.

4. Matériau selon la revendication 2 ou 3, **caractérisée en ce que** le polycyclocarbonate est un dicyclocarbonate.

5. Matériau selon l'une quelconque des revendications 2 à 4, **caractérisée en ce que** les groupes cyclocarbonates du polycyclocarbonate comportent 5 ou 6 chaînons.

6. Matériau selon l'une quelconque des revendications 2 à 5, **caractérisée en ce que** le liant polyhydroxyuréthane a été formé sans faire appel à des réactifs isocyanate.

7. Matériau selon la revendication 1, **caractérisée en ce qu'**il comprend un liant polymère de nature polyépoxyde issu de la réaction d'au moins un poly(éther cyclique) avec lui-même et/ou avec au moins un durcisseur, l'un au moins du poly(éther cyclique) et du durcisseur, s'il est utilisé, ayant été obtenu en trois étapes synthétiques ou moins à partir d'un composé précurseur biosourcé ayant un noyau benzénique substitué par un groupe hydroxyle et au moins un autre groupe fonctionnel choisi parmi les groupes acide carboxylique, aldéhyde, éther, ester, alcool, hydroxyle et cétone.

8. Matériau selon la revendication 7, **caractérisée en ce que** le durcisseur est choisi parmi les polyamines, les polyols, les polythiols, les aminoamides, les polyacides, les anhydrides d'acide, les aminothiols, les aminoalcools et les aminoacides.

9. Matériau selon l'une quelconque des revendications précédentes, **caractérisée en ce que** le composé précurseur biosourcé est choisi parmi la vanilline, le phloroglucinol, le catéchol, le résorcinol et l'acide gallique, de préférence la vanilline.

10. Matériau selon l'une quelconque des revendications précédentes, **caractérisée en ce qu'**il comprend en outre un granulat.

11. Procédé de préparation d'un matériau comprenant un liant polymère de nature polyhydroxyuréthane tel que défini dans la revendication 2, comprenant les étapes suivantes :
- fournir un poly(éther cyclique),
- soumettre ledit poly(éther cyclique) à une réaction de carbonatation par le dioxyde de carbone pour former un polycyclocarbonate,
- soumettre ledit polycyclocarbonate à une réaction de polycondensation en présence d'au moins une polyamine pour obtenir un liant polymère de nature polyhydroxyuréthane, **caractérisé en ce que** l'un au moins du poly(éther cyclique) et de la polyamine a été obtenu en trois étapes synthétiques ou moins à partir d'un composé précurseur biosourcé ayant un noyau benzénique substitué par un groupe hydroxyle et au moins un autre groupe fonctionnel choisi parmi les groupes acide carboxylique, aldéhyde, éther, ester, alcool, hydroxyle et cétone.
